# FASCICULE DE BREVET EUROPEEN

(11) **EP 1 105 712 B1**
(45) Date de publication et mention de la délivrance du brevet: **23.04.2003**
(21) Numéro de dépôt: 99936714.7
(22) Date de dépôt: 10.08.1999
(51) Int. Cl.: G01N 15/02

(54) **DISPOSITIF DE MESURE DE LA TAILLE DE PARTICULES EN DEPLACEMENT, NOTAMMENT POUR DES MESURES PLUVIOMETRIQUES**
MESSVORRICHTUNG DER GRÖSSE SICH BEWEGENDER TEILCHEN, INSBESONDERE FÜR REGENMESSUNGEN
DEVICE FOR MEASURING THE SIZE OF MOVING PARTICLES, IN PARTICULAR FOR PLUVIOMETRIC MEASUREMENTS

(30) Priorité: 11.08.1998 FR 9810287
(43) Date de publication de la demande: 13.06.2001
(73) Titulaire: CENTRE NATIONAL DE LA RECHERCHE SCIENTIFIQUE (CNRS), 75794 Paris Cedex 16 (FR)
(72) Inventeur: DELAHAYE, Jean-Yves, F-92170 Vanves (FR); LAVERGNAT, Jacques, F-78490 Grosrouvre (FR); VINSON, Jean-Paul, Raoul, F-92190 Meudon (FR); DANGUY, Théodore, F-75013 Paris (FR)
(74) Mandataire: Callon de Lamarck, Jean-Robert
(86) Numéro de dépôt international: FR9901962
(87) Numéro de publication internationale: WO00009987

(56) Documents cités:
- FR-A- 2 293 718
- US-A- 4 318 180
- US-A- 4 441 816
- US-A- 4 529 309
- US-A- 4 895 034
- US-A- 4 906 094

## Description

La présente invention concerne de manière générale les dispositifs de mesure pluviométrique par détermination expérimentale des caractéristiques de la pluie telles que la répartition des tailles, des vitesses des gouttes de pluie tombant à un endroit donné et des temps d'arrivée desdites gouttes de pluie.

On connaît déjà des dispositifs de mesures pluviométriques dont les mesures sont utilisées pour des applications telles que la modélisation en temps réel des conditions météorologiques pour le transport aérien, ou la prévision de perturbations engendrées par la pluie sur les télécommunications, en particulier à des ondes hyperfréquences.

Ces dispositifs mettent en oeuvre différents principes physiques dont les principaux sont :
- le recueil des gouttes de pluie dans un récipient,
- la détection radar,
- la détection d'impulsions ultrasonores correspondant aux impacts de gouttes de pluie sur une membrane,
- la détection optique du passage des gouttes à travers un faisceau lumineux.

Ni. les pluviomètres traditionnels (recueil de gouttes), ni les pluviomètres à détection radar ne permettent d'obtenir des mesures individuelles sur la taille et les instants de passage des gouttes détectées.

Quant aux autres techniques, si elles permettent d'accéder à des informations individuelles sur chaque goutte de pluie, elles ne permettent pas de mesurer la taille des petites gouttes (et notamment de mesurer des diamètres de gouttes inférieurs à 0,5 mm).

Cette limitation est pénalisante :
- pour la caractérisation générale de la pluie, car les gouttes de diamètre inférieur à 0,5 mm constituent une part non négligeable de la plupart des spectres de pluie,
- et plus particulièrement pour déterminer l'impact de la pluie sur les télécommunications, les gouttes de faible diamètre ayant dans ce domaine une influence importante.

Un but de la présente invention est de permettre de réaliser un dispositif apte à restituer des spectres de gouttes de pluie en mouvement et les distributions de leurs temps d'arrivée pour des diamètres de gouttes inférieurs à 0,5 mm.

On connaît déjà par US 4 529 309 et US 4 318 180 des dispositifs pour la mesure du diamètre de particules traversant un espace de mesure, comportant des moyens d'émission optique, des moyens de réception comportant au moins un photodétecteur recevant au moins une partie de la lumière issue des moyens d'émission après que celle-ci ait traversé l'espace de mesure, ainsi que des moyens de traitement qui reçoivent le signal en sortie dudit capteur, les moyens de réception comportant au moins deux tels photodétecteurs qui reçoivent des portions de la lumière issue des moyens d'émission, ces portions étant superposées selon la direction générale de déplacement des particules.

L'invention propose quant à elle un dispositif pluviométrique caractérisé en ce que ledit dispositif est un dispositif pluviométrique pour la mesure du diamètre de gouttes de pluie, les moyens de traitement comportant des moyens pour déterminer la valeur à laquelle l'intensité du courant en sortie d'un photodétecteur décroît lors du passage d'une goutte devant ledit photodétecteur et pour en déduire le diamètre individuel de ladite goutte, les moyens de traitement comportant en outre des moyens pour corréler les intensités de courant en sortie de l'un et l'autre des deux photodétecteurs pour distinguer le passage de petites gouttes devant ceux-ci par rapport au bruit des intensités de courant en sortie des photodétecteurs.

Comme on le comprendra à travers la description d'un exemple de réalisation de l'invention donné dans la suite du texte, un tel dispositif permet de détecter des gouttes de pluie en mouvement de petit diamètre (jusqu'à 0,1 mm ou inférieur).

Il permet en outre de déterminer la vitesse de ces particules, ainsi que leur sens de déplacement.

Des aspects préférés, mais non limitatifs du dispositif selon l'invention sont les suivants :
- les moyens d'émission comprennent une diode électroluminescente, ainsi que des moyens optiques pour redresser en un faisceau parallèle la lumière émise par ladite diode ;
- les moyens de réception comportent au moins deux fentes qui sont superposées selon la direction générale de déplacement dès particules et qui séparent la lumière ayant traversé l'espace de mesure en deux portions qui sont envoyées respectivement sur l'un et l'autre des deux capteurs ;
- les moyens de réception comportent en aval des fentes des moyens optiques pour concentrer la lumière reçue sur les capteurs ;
- il comporte des moyens pour chauffer des moyens optiques des moyens de réception ;
- il comporte des moyens pour protéger les capteurs du rayonnement lumineux ambiant entourant le dispositif ;
- les moyens de traitement comportent des moyens pour déterminer la vitesse des gouttes de pluie;
- les moyens de traitement comportent des moyens pour déterminer les instants d'arrivée des gouttes de pluie ;
- les moyens de traitement comportent des moyens pour déterminer le sens de déplacement des gouttes de pluie.

D'autres aspects, buts et avantages de la présente invention apparaîtront mieux à la lecture de la forme de réalisation suivante, donnée à titre d'exemple et faite en référence aux dessins annexés sur lesquels :
- la figure 1 est une représentation schématique d'une forme de réalisation du dispositif selon l'invention, ladite forme de réalisation étant destinée à effectuer des mesures pluviométriques.
- la figure 2 est une représentation schématique de la chaîne optique utilisée dans ce dispositif,
- les figures 3a à 3c illustrent l'évolution temporelle des signaux générés par le passage d'une goutte de pluie,
- la figure 4 présente deux courbes des signaux générés par le passage de plusieurs gouttes de pluie.

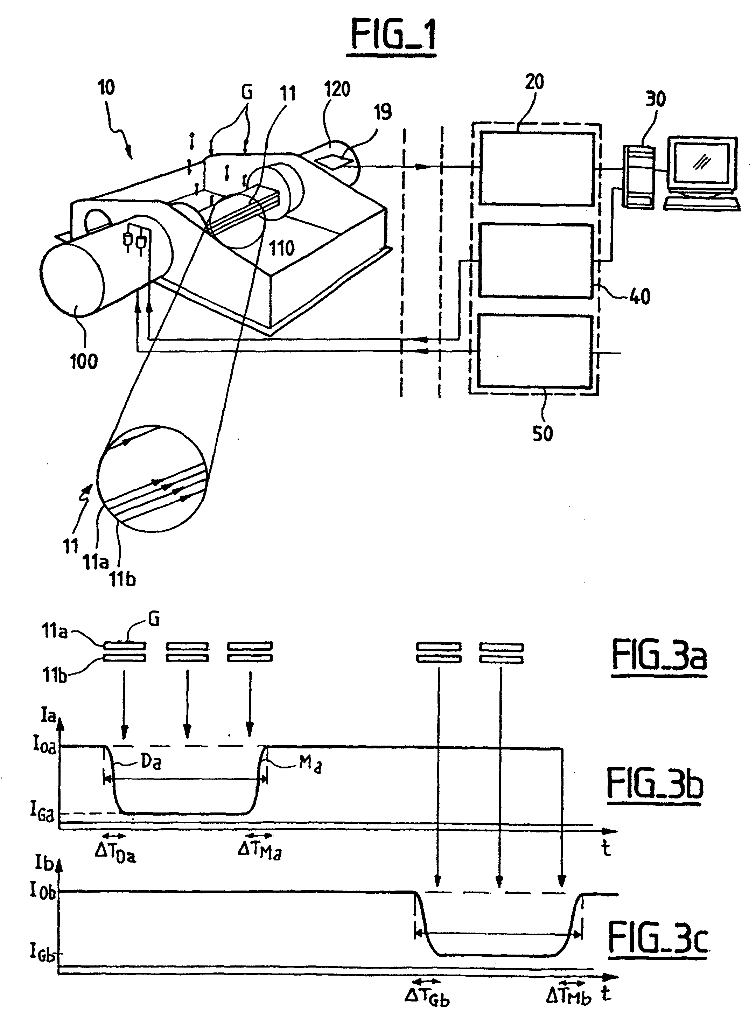

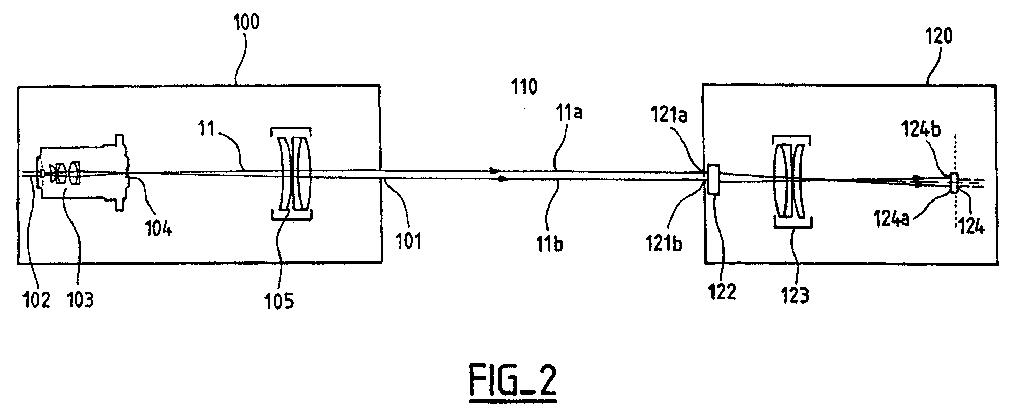

Le dispositif de mesure de pluviométrie illustré sur la figure 1 comprend un module 10 photoélectrique pour l'acquisition de signaux caractéristiques du passage de gouttes de pluie G dans un espace de mesure 110, ainsi que différents moyens référencés 20, 30, 40 et 50 sur la figure 1, pour la commande dudit module et le traitement des signaux qu'il permet d'acquérir.

Le module d'acquisition 10 comprend un boîtier d'émission 100 qui génère un faisceau lumineux parallèle 11 s'étendant selon une nappe horizontale plane, pour intercepter les gouttes de pluie avec un angle proche de 90°.

Ce faisceau sort du boîtier d'émission par une fente horizontale allongée (non représentée sur la figure). Cette fente a une hauteur totale de 8 mm, dont 6 mm correspondant à l'épaisseur utile de mesure ; 1 mm de garde en haut, 1 mm de garde en bas, pour tenir compte des fluctuations mécaniques entre les boîtiers d'émission et de réception. Elle a une largeur totale de 42 mm, dont 40 mm de largeur utile pour la mesure, 1 mm de garde à gauche, 1 mm da garde à droite. Le faisceau 11 est de longueur d'onde proche de l'infrarouge.

Une fois sorti du boîtier d'émission, le faisceau 11 se propage dans l'espace de mesure 110 - qui est un espace ouvert que le module 10 présente en sa partie médiane au travers duquel des gouttes de pluie peuvent tomber.

Le faisceau 11 est donc traversé par les gouttes de pluie dans cet espace de mesure 110.

Il est ensuite reçu dans un boîtier de réception 120, qui présente en entrée deux fentes rectangulaires horizontales superposées verticalement qui séparent ledit faisceau en deux portions que des moyens optiques dudit boîtier 120 concentrent sur deux photodiodes.

Ainsi, le faisceau 11 qui traverse l'espace de mesure 110 peut être considéré comme constitué de deux portions actives superposées (référencées par 11a et 11b sur la figure 1) séparées par une portion intermédiaire dont l'information n'est pas utilisée.

En tombant, les gouttes de pluie traversent successivement la portion active supérieure 11a, la portion intermédiaire, puis la portion inférieure 11b, la traversée des trois nappes de faisceau par les gouttes s'effectuant avec un angle sensiblement égal à 90° par rapport aux plans desdites nappes.

La figure 2 est une représentation des éléments optiques du module d'acquisition 10, lesdits éléments constituant une chaîne optique pour émettre le faisceau 11, et recueillir séparément la lumière des portions actives de faisceau 11a, 11b après qu'elle a traversé l'espace de mesure 110.

Le boîtier d'émission 100 comprend une source lumineuse 102 qui est une diode électroluminescente.

La lumière émise par cette diode 102 est reçue par un premier ensemble 103 constitué d'un ménisque aplanéique et de deux doublets opposés.

En variante, la source 102 peut être un laser.

Cet ensemble 103 concentre la lumière de la source 102 sur un trou-source 104. Le faisceau 11 issu du trou-source 104 est ensuite redressé par un triplet 105 pour constituer un faisceau parallèle horizontal, puis il quitte le boîtier d'émission 100 par la fente rectangulaire dont il a été question plus haut et qui a été référencée par 101 sur la figure 2b.

En sortie du boîtier 100 d'émission, le faisceau 11 traverse l'espace de mesure 110 et pénètre dans le boîtier 120 par les deux fentes d'entrée rectangulaires horizontales que présente le boîtier 120. Ces fentes ont été référencées par 121a et 121b. Elles sont de dimensions 40X2 mm et sont séparées de 2mm.

Après avoir pénétré dans le boîtier 120, la lumière des deux portions actives 11a et 11b est concentrée par un prisme 122 et un triplet 123 sur respectivement les deux photodiodes 124a et 124b d'un récepteur photoélectrique double 124.

Par ailleurs, ainsi qu'illustré sur la figure 1, le dispositif de mesure de pluviométrie comprend en association avec le module d'acquisition :
- une interface 19 qui convertit les signaux analogiques issus du récepteur 124 en signaux numériques série ;
- une interface 20 reliée au module d'acquisition 10. Cette interface transforme les signaux numériques issus de l'interface 19 en signaux parallèles ;
- un ordinateur de gestion 30 relié à l'interface 20 pour récupérer lesdits signaux numériques, traiter ces signaux afin d'en déduire des informations sur la pluie traversant l'espace de mesure du module d'acquisition, visualiser et stocker ces informations,
- un module de commande d'étalonnage 40 interconnecté entre l'ordinateur 30 et le module d'acquisition 10. Ce module de commande d'étalonnage reçoit des instructions de l'ordinateur de gestion et transmet en conséquence des signaux d'étalonnage au module 10,
- une alimentation électrique 50 reliée au module d'acquisition.

Le niveau d'intensité de la lumière émise par le boîtier 100 pouvant être considéré constant pendant la durée de la mesure, le passage d'une goutte au travers d'une des deux portions actives de faisceau 11a et 11b entraîne une diminution de l'intensité lumineuse concentrée sur la photodiode correspondant à cette portion de faisceau.

On a représenté sur la figure 3a la chute d'une goutte de pluie G au travers des faisceaux 11a et 11b, ainsi que sur les graphes des figures 3b et 3c les modifications des intensités lumineuses Iₐ et I_{b} reçues par les photodiodes 124a et 124b, lors de cette chute.

En l'absence de gouttes de pluie dans le domaine de mesure, les intensités Iₐ et I_{b} sont les valeurs de référence Iₒₐ et I_{ob} correspondant à la totalité de la lumière des nappes de faisceaux 11a et 11b respectivement.

Lorsque maintenant une goutte G pénètre dans l'épaisseur verticale de la nappe de faisceau supérieure 11a, la valeur de Iₐ décroît selon une pente descendante Da pendant un intervalle de temps ΔT_{Da}, jusqu'à ce que la goutte soit entièrement dans l'épaisseur de la portion 11a et que Iₐ se stabilise à une valeur I_{Ga}.

La goutte G poursuivant sa chute, elle quitte l'épaisseur de la nappe 11a et Iₐ croît pendant ΔT_{Ma} de I_{Ga} à Iₒₐ, selon une pente ascendante Ma.

Lorsque la goutte G pénètre dans l'épaisseur de la nappe de faisceau inférieure 11b, la valeur de I_{b} décroît de I_{ob} à I_{Gb} pendant l'intervalle de temps ΔT_{Gb}. Enfin, lorsque la goutte quitte le bord inférieur de la nappe de faisceau 11b, I_{b} retrouve sa valeur de référence I_{ob} par une variation pendant ΔT_{Mb}.

La quantité de lumière absorbée ou déviée par la goutte dépend de la taille de ladite goutte, il est possible de relier les valeurs I_{Gb} et I_{Ga} à une dimension caractéristique de la goutte G, par exemple son diamètre équivalent qui est le diamètre qu'aurait la goutte sphérique ne subissant pas les efforts aérodynamiques dus à sa chute, et les déformations qui en résultent.

Si l'établissement d'une telle relation entre l'intensité lumineuse reçue et la taille de la goutte est connu en soi (voir par exemple le brevet FR 2 293 718), l'utilisation selon l'invention de deux faisceaux superposés fournissant chacun un signal permet d'effectuer avantageusement, grâce aux moyens de traitement de l'ordinateur de gestion 30, une corrélation fine des signaux Iₐ et I_{b}.

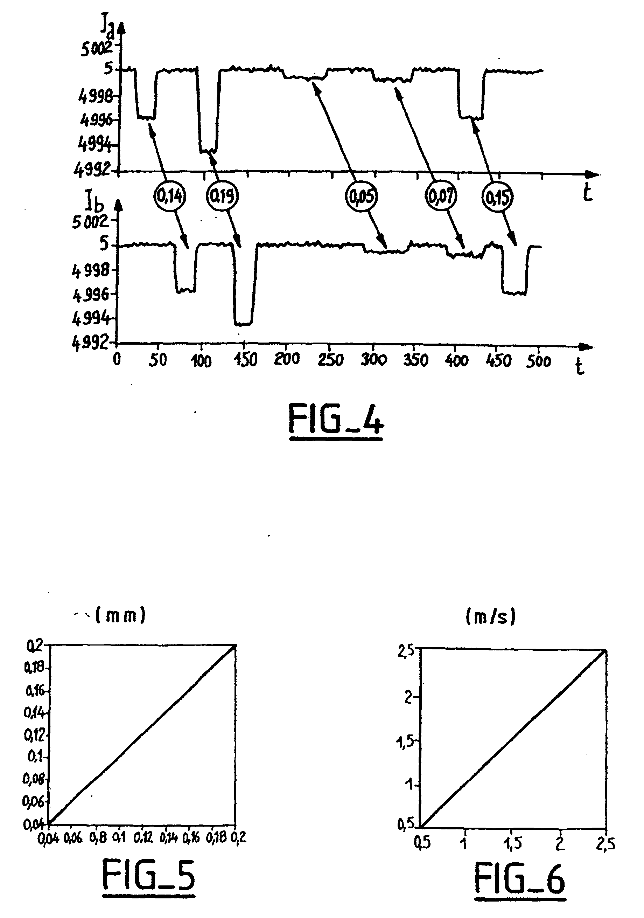

On a porté sur les graphes de la figure 4 un exemple d'enregistrement pour les signaux Iₐ et I_{b}.

On constate que chaque signal comprend un bruit rendant impossible la détection fiable des petites gouttes.
le traitement de corrélation mis en oeuvre par l'ordinateur de gestion sur les signaux I_{Ga} et I_{Gb} transmis par les deux faisceaux lors du passage d'une même goutte G dans l'espace de mesure permet d'améliorer aussi sensiblement la précision des mesures en caractérisant les gouttes dont le diamètre équivalent peut avoir une valeur aussi petite que 0,1 mm environ.

Le traitement de corrélation peut être de tout type. Il est par exemple constitué par un traitement de corrélation par Transformée de Fourier rapide (FFT selon la terminologie de l'homme du métier).

On notera que la description qui précède concernait des gouttes d'un diamètre inférieur à 2 mm. Cependant, ce principe de mesure s'applique également à des particules d'un diamètre supérieur, sous réserve que le traitement tienne compte du fait que la surface occultée est proportionnelle à l'intersection entre la surface de la fente et la surface de la particule.

Sur cette figure 4, les valeurs encerclées sont les rayons équivalents des gouttes traversant les faisceaux (en mm). Ces valeurs sont comme on l'a dit issues des moyens de traitement associés à l'ordinateur de gestion 30, lesdits moyens de traitement mettant en oeuvre des corrélations entre les signaux reçus par les deux photodiodes du dispositif.

En outre, le fait de disposer de deux faisceaux permet de réduire l'épaisseur desdits faisceaux et de diminuer ainsi la probabilité que deux gouttes différentes tombant ensemble génèrent un signal apparaissant comme unique lors de leur traversée du faisceau.

D'autre part, les moyens de traitement du dispositif permettent également de déduire des pentes Dₐ et Mₐ, ainsi que de la durée de séjour d'une goutte dans un faisceau, la vitesse de chute de la goutte.

Un avantage supplémentaire du dispositif selon l'invention est que le fait de disposer de deux signaux permet de déterminer sans ambiguïté le sens de déplacement des gouttes, ce qui n'était pas le cas avec les dispositifs de l'état de la technique tel que celui décrit dans le brevet FR 2 293 718. Cet avantage n'est pas négligeable dans la mesure où de nombreuses gouttes de pluie traversent le dispositif de bas en haut, portées par des courants de convection.

Selon une variante non représentée sur les figures, les deux boîtiers du module 10 comprennent des moyens de chauffage des éléments optiques, reliés à l'alimentation 50 de la figure 1. Dans cette variante, les moyens de chauffage permettent de diminuer les effets de condensation sur l'optique.

Selon une autre variante de l'invention, il est prévu des moyens tels que des volets opaques entourant les deux fentes du boîtier 120 pour empêcher le rayonnement ambiant de perturber la mesure de la lumière des portions de faisceau 11a et 11b et pour protéger les éléments du boîtier 120 des projections d'eau dans le cas des applications à la mesure de pluviométrie. Lors de la mise en oeuvre du dispositif selon l'invention, le module d'acquisition est placé in situ sur le flux de gouttes (ou de particules) à caractériser.

Les autres éléments du dispositif peuvent être rassemblés dans une zone de traitement protégée dans le cas de mesures de pluviométrie.

Pour l'étalonnage du dispositif, il est possible selon l'invention d'occulter partiellement et alternativement l'un ou l'autre des bords latéraux des deux portions de faisceau 11a et 11b, au moyen de tiges verticales pouvant être interposées dans l'espace de mesure 110 sur le trajet de faisceaux.

L'opérateur connaissant la quantité de lumière devant être interceptée par la tige, il est possible de déplacer la tige dans l'espace de mesure pour détecter d'éventuelles inhomogénéités spatiales de la distribution de lumière des faisceaux.

De telles inhomogénéités peuvent être dues à une pollution, ou à un corps étranger (insecte... ) dans l'espace de mesure. Le déplacement des tiges est commandé par le module de commande d'étalonnage 40.

Selon une autre caractéristique de l'invention, il est possible de prévoir des moyens de modulation de la lumière émise par la source lumineuse 102. La modulation de l'émission de lumière permet d'une part d'augmenter le rapport signal/bruit des signaux Iₐ et I_{b} et d'autre part d'effectuer des mesures rapides du niveau de lumière ambiant par comparaison des signaux reçus pendant les impulsions lumineuses et entre ces impulsions.

En variante encore, il est possible de placer directement la source 102 à la position du trou source 104. On supprime alors l'ensemble 103 et le trou source 104. La source 102 utilisée est alors le modèle référencé HE8404SG de HITACHI. Les autres éléments restent inchangés.

## Revendications

1. Dispositif pour la mesure du diamètre de particules traversant un espace de mesure (110), comportant des moyens d'émission optique, des moyens(100) de réception comportant au moins un photodétecteur recevant au moins une partie de la lumière issue des moyens d'émission après que celle-ci ait traversé l'espace de mesure, ainsi que des moyens (20, 30) de traitement qui reçoivent le signal en sortie dudit capteur (120), les moyens de réception comportant au moins deux tels photodétecteurs (124a, 124b) qui reçoivent des portions de la lumière issue des moyens d'émission, ces portions étant superposées selon la direction générale de déplacement des particules, **caractérisé en ce que** ledit dispositif est un dispositif pluviométrique pour la mesure du diamètre de gouttes de pluie, les moyens de traitement (20, 30) comportant des moyens pour déterminer la valeur à laquelle l'intensité du courant en sortie d'un photodétecteur décroît lors du passage d'une goutte devant ledit photodétecteur et pour en déduire le diamètre individuel de ladite goutte, les moyens de traitement (20, 30) comportant en outre des moyens pour corréler les intensités de courant en sortie de l'un et l'autre des deux photodétecteurs pour distinguer le passage de petites gouttes devant ceux-ci par rapport au bruit des intensités de courant en sortie des photodétecteurs (124a, 124b).

2. Dispositif selon la revendication 1, **caractérisé en ce que** les moyens d'émission (100) comprennent une diode électroluminescente (102), ainsi que des moyens optiques (103, 104, 105) pour redresser en un faisceau parallèle la lumière émise par ladite diode.

3. Dispositif selon l'une des revendications précédentes, **caractérisé en ce que** les moyens de réception comportent au moins deux fentes qui sont superposées selon la direction générale de déplacement des particules et qui séparent la lumière ayant traversé l'espace de mesure en deux portions qui sont envoyées respectivement sur l'un et l'autre des deux capteurs.

4. Dispositif selon la revendication 3, **caractérisé en ce que** les moyens de réception comportent en aval des fentes des moyens optiques pour concentrer la lumière reçue sur les capteurs (124a, 124b).

5. Dispositif selon la revendication 4, **caractérisé en ce qu'**il comporte des moyens pour chauffer des moyens optiques des moyens de réception.

6. Dispositif selon l'une des revendications précédentes, **caractérisé en ce qu'**il comporte des moyens pour protéger les capteurs du rayonnement lumineux ambiant entourant le dispositif.

7. Dispositif selon l'une des revendications précédentes, **caractérisé en ce que** les moyens de traitement comportent des moyens pour déterminer la vitesse des gouttes de pluie.

8. Dispositif selon l'une des revendications précédentes, **caractérisé en ce que** les moyens de traitement comportent des moyens pour déterminer les instants d'arrivée des gouttes de pluie.

9. Dispositif selon l'une des revendications précédentes, **caractérisé en ce que** les moyens de traitement comportent des moyens pour déterminer le sens de déplacement des gouttes de pluie.

## Claims

1. Device for measuring the diameter of particles passing through a measuring space (110), comprising optical emission means, reception means (100) comprising at least one photodetector receiving at least part of the light emanating from the emission means after this light has passed through the measuring space, as well as processing means (20, 30) which receive the signal at the output of the said sensor (120), the reception means comprising at least two such photodetectors (124a, 124b) which receive portions of the light emanating from the emission means, these portions being superposed along the general direction of movement of the particles, **characterized in that** the said device is a pluviometric device for measuring the diameter of raindrops, the processing means (20, 30) comprising means for determining the value to which the intensity of the current at the output of a photodetector decreases during the passage of a drop in front of the said photodetector and for deducing therefrom the individual diameter of the said drop, the processing means (20, 30) furthermore comprising means for correlating the intensities of current at the output of one and the other of the two photodetectors so as to distinguish the passage of small drops in front of the latter with respect to the noise of the current intensities at the output of the photodetectors (124a, 124b).

2. Device according to Claim 1, **characterized in that** the emission means (100) comprise a light-emitting diode (102), as well as optical means (103, 104, 105) for straightening the light emitted by the said diode into a parallel beam.

3. Device according to one of the preceding claims, **characterized in that** the reception means comprise at least two slits which are superposed along the general direction of movement of the particles and which separate the light having passed through the measuring space into two portions which are sent respectively to one and the other of the two sensors.

4. Device according to Claim 3, **characterized in that** the reception means comprise, downstream of the slits, optical means for concentrating the light received on the sensors (124a, 124b).

5. Device according to Claim 4, **characterized in that** it comprises means for heating optical means of the reception means.

6. Device according to one of the preceding claims, **characterized in that** it comprises means for protecting the sensors from the ambient luminous radiation surrounding the device.

7. Device according to one of the preceding claims, **characterized in that** the processing means comprise means for determining the velocity of the raindrops.

8. Device according to one of the preceding claims, **characterized in that** the processing means comprise means for determining the instants of arrival of the raindrops.

9. Device according to one of the preceding claims, **characterized in that** the processing means comprise means for determining the direction of movement of the raindrops.

## Patentansprüche

1. Vorrichtung zur Messung des Durchmessers von einen Meßraum (110) durchquerenden Teilchen, umfassend Mittel zur optischen Emission, Empfangsmittel (100), die mindestens einen Photodetektor umfassen, der mindestens einen Teil des von den Emissionsmitteln ausgesendeten Lichts empfängt, nachdem dieses den Meßraum durchquert hat, sowie Behandlungsmittel (20, 30), die das Signal am Ausgang des genannten Sensors (120) empfangen, wobei die Empfangsmittel mindestens zwei solcher Photodetektoren (124a, 124b) umfassen, die Teile des von den Emissionsmitteln ausgesandten Lichts empfangen, wobei diese Teile gemäß der allgemeinen Bewegungsrichtung der Teilchen übereinander angeordneten sind, **dadurch gekennzeichnet, daß** die genannte Vorrichtung eine Regenmeßvorrichtung zur Messung des Durchmessers von Regentropfen ist und die Behandlungsmittel Mittel (20, 30) umfassen, um den Wert, mit dem die Stromstärke am Ausgang eines Photodetektors abnimmt, während ein Tropfen vor dem besagten Photodetektor passiert, zu bestimmen und um daraus den individuellen Durchmesser des Tropfens abzuleiten, wobei die Behandlungsmittel (20, 30) außerdem Mittel umfassen, um die Stromstärken am Ausgang des einen und des anderen der beiden Photodetektoren miteinander zu korrelieren, um das Passieren kleiner Tropfen vor diesen bezüglich des Rauschens der Stromstärken am Ausgang der Photodetektoren (124a, 124b) zu unterscheiden.

2. Vorrichtung nach Anspruch 1, **dadurch gekennzeichnet, daß** die Emissionsmittel (100) eine Elektroluminiszenzdiod (102), sowie optische Mittel (103, 104, 105), um das von besagter Diode ausgesandte Licht zu einem parallelen Lichtbündel auszurichten, umfassen.

3. Vorrichtung nach einem der vorangehenden Ansprüche, **dadurch gekennzeichnet, daß** die Empfangsmittel mindestens zwei Spalte umfassen, die gemäß der allgemeinen Bewegungsrichtung der Teilchen übereinander angeordnet sind und die das Licht, das den Meßraum durchquert hat, in zwei Teile aufteilen, die auf den einen bzw. den anderen Sensor gesandt werden.

4. Vorrichtung nach Anspruch 3, **dadurch gekennzeichnet, daß** die Empfangsmittel nach den Spalten optische Mittel umfassen, um das empfangene Licht auf die Sensoren (124a, 124b) zu konzentrieren.

5. Vorrichtung nach Anspruch 4, **dadurch gekennzeichnet, daß** sie Mittel zur Erhitzung der optischen Mittel der Empfangsmittel umfaßt.

6. Vorrichtung nach einem der vorangehenden Ansprüche, **dadurch gekennzeichnet, daß** sie Mittel zum Schützen der Lichtsensoren vor Umgebungslicht, das die Vorrichtung umgibt, umfaßt.

7. Vorrichtung nach einem der vorangehenden Ansprüche, **dadurch gekennzeichnet, daß** die Behandlungsmittel Mittel zum Bestimmen der Geschwindigkeit der Regentropfen umfassen.

8. Vorrichtung nach einem der vorangehenden Ansprüche, **dadurch gekennzeichnet, daß** die Behandlungsmittel Mittel zum Bestimmen des Ankunftszeitpunkts der Regentropfen umfassen.

9. Vorrichtung nach einem der vorangehenden Ansprüche, charakterisiert dadurch, daß die Behandlungsmittel Mittel zum Bestimmen der Bewegungsrichtung der Regentropfen umfassen.
